# EUROPEAN PATENT APPLICATION

(11) **EP 1 411 658 A2**
(43) Date of publication of application: **21.04.2004**
(21) Application number: 03290896.4
(22) Date of filing: 09.04.2003
(51) Int. Cl.: H04B 10/155, H04L 27/20

(54) **Optical MSK transmitter**

(30) Priority: 15.10.2002 EP 02360282
(71) Applicant: ALCATEL, 75008 Paris (FR)
(72) Inventor: Wedding, Berthold, 70825 Korntal-Münchingen (DE)
(74) Representative: Rausch, Gabriele, Dr.

(57) **Abstract**

Part of the invention is a method of generating an optical MSK signal comprising the steps of generating an optical signal using a laser using a NRZ-signal with a defined bit rate and a sinusoidal signal with half of the frequency of the bit rate to modulate the optical signal. A further part of the invention is a method for precoding the bit stream, wherein a differential precoder in combination with a coder is used for inverting the bit of the bit stream in using a predefined pattern.

## Description

### Technical Field of the Invention

The present invention is generally related to a digital commutation system that transfers information over an optical line. More specifically the invention is related to a modulation of optical minimum-shift keying (MSK) signals. Even more the invention deals with the generation of optical MSK signals and the necessary precoding.

### Prior Art

The known generation of optical minimum shift keying signals, especially for application at high bit rates, is limited by the bandwidth of available components. Normally this is done by a directly modulated laser diode using the adiabatic chip to generate an optical frequency-shift-keying [1].

Another implementation uses a sinusoidal signal and a cosinusoidal signal which are combined, wherein one signal is delayed by T=1/R, generating a signal called offset quadrature PSK (OQPSK) or staggered quadrature PSK (SQPSK) [2].

### Background of the invention

For high bandwidth e.g. 40 Gbit/s, due to limited modulation bandwidth, standard available laser diodes cannot be used for MSK signal generation. The proposed invention is one method to generate optical MSK signals at a very high bit rate using available optical components.

### Summary of the invention

It is therefore an object of the present invention to provide a method and a circuitry for generating an optical MSK signal.

The present invention recognizes the possibility that all of the mentioned functions can be performed by a combination of a NRZ-signal with a defined bit rate and a sinusoidal signal with half of the frequency of the bit rate to modulate the optical signal. In an alternative embodiment the problem is solved by a first bipolar RZ-signal with a defined bit rate and a second RZ-signal with the same bit-rate, wherein the second signal is delayed, to modulate the optical signal.

Other objects and advantages of the present invention may be ascertained from a reading of the specification and appended claims in conjunction with the drawings wherein.

### Detailed Description

Part of the invention is a method of generating an optical MSK signal comprising the steps of generating an optical signal by using a laser, wherein a NRZ-signal with a defined bit rate and a sinusoidal signal with half of the frequency of the bit rate modulate the phase of the optical signal of the laser.

A method using the NRZ-Signal (NON Return to Zero) codes a binary value by changing from negative to positive, without going back to zero. Timing is used to distinguish the bits.

There are at least two preferred ways to generate the described optical signal. In a first step the optical signal is phase-modulated by using said NRZ-signal. The modulated optical signal will then be phase-modulated by a sinusoidal signal. The steps can be permutated.

The preferred embodiments of the invention are set forth in the dependent claims.

In an alternative preferred method the NRZ-signal and the sinusoidal signal are combined before modulating the optical signal. The combining is done by a electronic combiner.

The next preferred embodiment uses a bipolar RZ-signal and a RZ-signal wherein one of the signals is delayed. The signals may be combined before modulating the optical signal. It is also possible that each RZ-signal modulates the optical signal phase.

The method uses a first bipolar RZ-signal with a defined bit rate and a second RZ-signal with identical bit-rate, wherein the second signal is delayed. These signals modulate the phase of the optical signal.

Another part of the invention is a circuitry that provides means to run the above mentioned method. Possible means to generate a NRZ-signal with a defined bit rate are electronic multiplexers. An electronic frequency divider is a possible mean to generate a sinusoidal signal with half of the frequency of the bit rate. Optical phase modulators are well-known, e.g. [3].

Combining means, e.g. microwave power combiners combines the NRZ-signal and the sinusoidal signal.

In an alternative embodiment a bipolar RZ-signal of a first signal source, e.g. a demultiplexer is combined with a delayed signal of a second RZ-signal-source with identical bit rate. The combined signal is used to modulate the optical signal, with a known modulator e.g. a LN phase modulator [3].

A further part of the invention are a method and a device for precoding a bit stream for an optical transmitter, wherein bits of a differential encoded bit stream are inverted according to a predefined pattern. This method or device can be used in combination with the methods and devices mentioned above. In a preferred embodiment every 3rd and 4th bit of the NRZ bit stream are inverted. The encoded NRZ-Signal is then combined with a sinusoidal signal.

Although no multiple referenced claims are drawn, all reasonable combinations of the features in the claims shall be disclosed.

### Description of the drawings

For a more complete understanding of the present invention, reference is established to the following description made in connection with accompanying drawings in which:
- Fig. 1: shows an implementation with two optical phase modulators;
- Fig. 2: shows an implementation with one optical phase modulator;
- Fig. 3: shows an implementation with one optical phase modulator and one 20 Gbit/s bipolar RZ data signal and one 20 Gbit/s RZ data signal;
- Fig. 4: shows an implementation of a precoder for the optical transmitter.

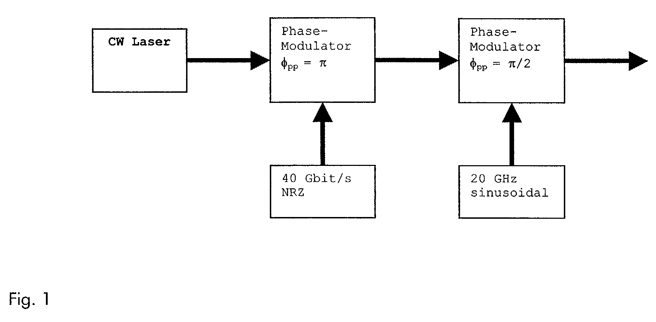

Figure 1 shows an implementation with a 40 Gbit/s NRZ generator, that interacts with a phase modulator. The peak to peak phase modulation is π.The beam of the CW laser is then modulated with a 20 GHZ sinusoidal signal, wherein the peak to peak phase modulation is π/2.

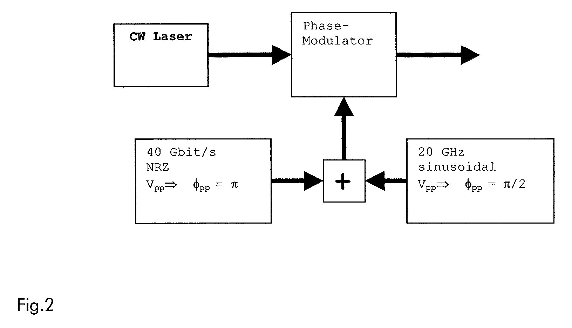

Figure 2 describes a modification by using only one phase modulator and a combiner combining the 40 Gbit/s NRZ signal and the 20 GHZ sinusoidal signal. The signal amplitudes are adjusted in such a way that a peak to peak phase modulation of π for the 40 Gbit/s signal and π/2 for the 20 GHZ signal are generated.

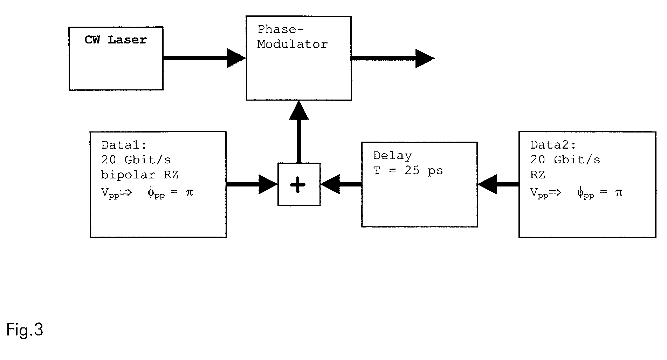

Figure 3 describes a modification of figure 2 by using one 20 Gbit/S bipolar RZ signal and one 20 Gbit/s RZ signal, wherein one signal is delayed by 25 ps . After that the two signals are combined before passed to a phase modulator. The signal amplitudes are adjusted in such a way that a peak to peak phase modulation of π for the two 20 Gbit/s signals is generated.

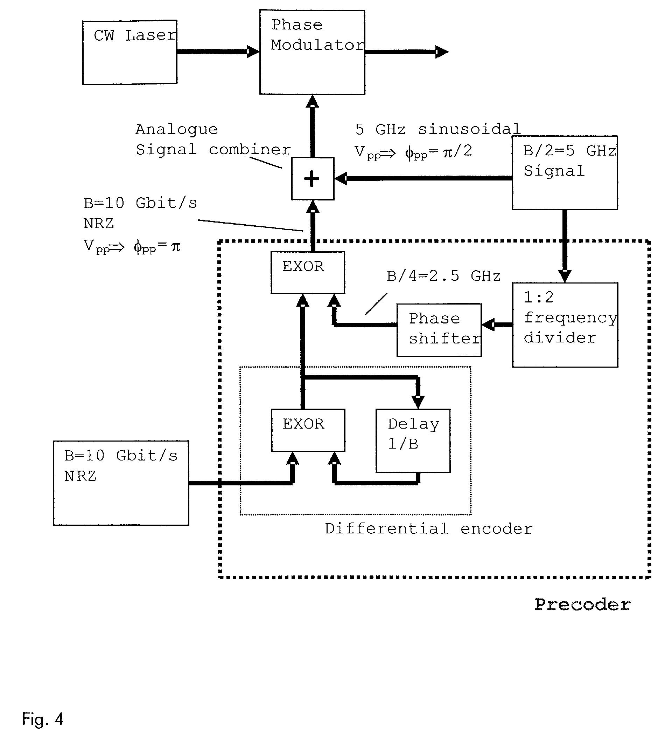

Figure 4 describes the precoding of a B=40 Gbit/s NRZ signal comprising a differential encoder, that delays the signal and combines it with an EXOR operation. In a preferred embodiment the output of the EXOR gate is delay by 1/B and passed again to the EXOR-gate. The sinusoidal signal is divided and phased shifted. In a preferred embodiment the sinusoidal signal is phase shifted, divided in frequency by 2 and reshaped (e.g. in the frequency divider), resulting in a (rectangular) clock signal with frequency B/4 = 10 GHz. A further EXOR operation combines the precoded NRZ-Signal and the clock signal B/4. Thus leads to an inverting of the 3^{rd} and 4^{th} bit of the bit stream. Other embodiments may also invert other bit sequences.

## Claims

1. A method of generating an optical signal comprising the steps of:
- generating an optical signal by using a laser
- using a NRZ-signal with a defined bit rate and a sinusoidal signal with half of the frequency of the bit rate to modulate the optical signal.

2. The method according to the previous claim, wherein in a step said optical signal is modulated by using said NRZ-signal and wherein in another step said optical signal is modulated by using said sinusoidal signal.

3. The method according to claim 1, wherein said NRZ-signal and said sinusoidal signal are combined before modulating said optical signal.

4. A method of generating an optical MSK signal comprising the steps of:
- generating an optical signal by using a laser
- using a first bipolar RZ-signal with a defined bit rate and a second RZ-signal with identical bit-rate, wherein the second signal is delayed, to modulate the optical signal.

5. The method according to claim 5, wherein said first bipolar RZ-signal and said second RZ-signal are combined before modulating said optical signal.

6. A method for precoding a bit stream for an optical transmitter, wherein bits of a differential encoded bit stream are inverted according to a predefined pattern.

7. The method according to claim 6, wherein every 3^{rd} and 4^{th} bit of the bit stream are inverted.

8. The method according to claim 6, wherein the bit stream is delayed and/or combined with a clock signal, in particular by B/4.

9. The method according to claim 8, wherein the sinusoidal signal is phased shifted and/or frequency divided.

10. The method according to claim 8, wherein the bit stream is delayed by the reciprocal of the transfer rate.

11. The method according to claim 8, wherein the combination is done by an EXOR operation.

12. The method according to claim 6, wherein the method is combined with the method according to claim 1 and/or claim 3 and/or claim 5.

13. A circuitry to generate an optical MSK signal comprising:
- a laser generating an optical signal
- means to generate a NRZ-signal with a defined bit rate
- means to generate a sinusoidal signal with half of the frequency of the bit rate
- means to modulate the optical signal by using the output of said means to generate the NRZ-signal and said means to generate the sinusoidal signal.

14. The circuitry according to claim 13, wherein a combining means combines the output of said means to generate the NRZ-signal and the output of said means to generate the sinusoidal signal.

15. The circuitry according to claim 13, wherein a circuitry according to claim 19 is integrated.

16. A circuitry to generate an optical MSK signal comprising:
- a laser generating an optical signal
- means to generate a first bipolar RZ-signal with a defined bit rate
- means to generate a second RZ-signal with identical bit-rate, wherein the second signal is delayed,
- means to modulate the optical signal by using the output of said means to generate said first bipolar RZ-signal and the output of said means to generate said second RZ-signal.
to modulate the optical signal.

17. The circuitry according to claim 16, wherein a means to combine said first bipolar RZ-signal and said second RZ-signal passes the signal to said means to modulate the optical signal.

18. The circuitry according to claim 16, wherein a circuitry according to claim 19 is integrated.

19. A circuitry for an optical MSK transmitter, for the modulation of a laser generated optical signal, comprising:
- means to differential precode a bit stream transported by a NRZ-signal,
- means to invert bits of the bit stream according to a predefined pattern.

20. The circuitry according to claim 19, wherein the means invert every 3^{rd} and 4^{th} bit of the bit stream.

21. The circuitry according to claim 19, wherein means for delaying the NRZ-Signal and/or means for combing a clock signal B/4 with the NRZ-Signal are integrated.

22. The circuitry according to claim 21, wherein the means for delaying the bit stream are configured by delaying the bit stream by the reciprocal of the transfer rate.

23. The circuitry according to claim 21, wherein the means for combining is an EXOR-gate.

24. The circuitry according to claim 19, wherein means for phase shifting the clock signal and/or means for frequency dividing the clock signal are integrated.
